# EUROPÄISCHE PATENTSCHRIFT

(11) **EP 1 080 630 B1**
(45) Veröffentlichungstag und Bekanntmachung des Hinweises auf die Patenterteilung: **12.05.2004**
(21) Anmeldenummer: 00118365.6
(22) Anmeldetag: 24.08.2000
(51) Int. Cl.: A01F 29/20

(54) **Verfahren zum Einstellen des Schneidspaltes an Häckslern**
Method for adjusting the cutting knife clearance in shredders
Procédé pour ajuster le jeu entre couteaux dans broyeurs

(30) Priorität: 06.09.1999 DE 19942400
(43) Veröffentlichungstag der Anmeldung: 07.03.2001
(73) Patentinhaber: Case Harvesting Systems GmbH, 01844 Neustadt (DE)
(72) Erfinder: Heinrich, André, 02708 Löbau (DE)
(74) Vertreter: Müller, Lutz

(56) Entgegenhaltungen:
- EP-A- 0 291 216
- EP-A- 0 649 591
- EP-A- 0 676 131
- DE-A- 3 010 416
- US-A- 4 335 569

## Beschreibung

Die Erfindung betrifft ein Verfahren zum Einstellen des Schneidspaltes an Häckslern zur Verarbeitung landwirtschaftlicher Erntegüter, forstwirtschaftlicher Kulturen sowie für sogenannte nachwachsende Rohstoffe, mit den Merkmalen nach dem Oberbegriff des Patentanspruches 1.

Derartige Häcksler befinden sich vorzugsweise als Arbeitsaggregat in gezogenen oder selbstfahrenden Feldhäckslem, stationären Häckselmaschinen oder als Zusatzbaugruppe in anderen landwirtschaftlichen Erntemaschinen, wie beispielsweise in Mähdreschern, zum Zerkleinern des ausgedroschenen Strohs. Sie weisen eine rotierende Häckseltrommel mit an deren Umfang schrauben- bzw. keilförmig angeordneten oder aus kurzen Segmenten bestehende Häckselmesser auf. Diese wirken mit einer quer zur Fahrtrichtung zeigenden und horizontal ausgerichteten Gegenschneide zusammen, die beidseitig nahe der Häckseltrommel am Häckseltrommelgehäuse befestigt ist, so daß das Häckselgut über die Gegenschneide den Häckselmessern zugeführt und durch deren Zusammenwirken in kleine Stücke geschnitten wird.

Mit fortlaufendem Einsatz werden jedoch die Häckselmesser stumpf, so daß sie von einer in den Häcksler integrierten Schleifeinrichtung relativ häufig nachgeschliffen werden müssen. Da für das Einhalten der gewünschten Häcksellänge und zur Minimierung der Antriebsleistung für die Häckseltrommel neben scharfen Häckselmessern ein sehr enger Schneidspalt notwendig ist, muß nach jedem Nachschleifen die Einstellung der Gegenschneide zu den Häckselmessern neu vorgenommen werden.So ist es beispielsweise bei selbstfahrenden Feldhäckslern mit einem hohen Durchsatz an Häckselgut üblich, diesen Einstellvorgang durch den Bediener vom Fahrerstand aus vorzunehmen.

Zum Einstellen des Schneidspaltes an Häckslem gibt es bereits mehrere Verfahren, die nachfolgend im Anwendungsfall an Feldhäckslern näher erläutert werden sollen.

So ist es beispielsweise aus der DE 29 26 538 C2 bekannt, die Gegenschneide mit einem beidseitig an ihr und und am Häckseltronunelgehäuse angeordneten Einstellmechanismus auf die mit Häckselmessem besetzte rotierende Häckseltrommel zu und von dieser weg zu bewegen. Das ist völlig unabhängig voneinander auf beiden Seiten möglich. Zur Verstellung selbst dienen mit Schraubspindeln verbundene Elektromotoren, die nach beendetem Schleifen der Häckselmesser zuerst die eine Seite der Gegenschneide auf Knopfdruck des Bedieners an die Häckselmesser bis zu deren Kontakt heranstellen. Der Zustellvorgang wird dann vom Bediener manuell unterbrochen, wenn er aufgrund des Kontaktes ein Ticken hört. Danach wird durch einen Drehrichtungswechsel der Elektromotoren die Gegenschneide zum Erhalt eines Schneidspaltes ein Stück von den Häckselmessern weg bewegt. Die gleichen Bewegungsabläufe werden mit der anderen Seite der Gegenschneide wiederholt. Wenn die Gegenschneide einmal aus einer extremen Schiefstellung zu den Häckselmessern eingestellt wird, muß zum Erreichen eines gleichmäßigen Schneidspaltes über die gesamte Länge der Gegenschneide der Zu- und Rückstellvorgang der Gegenschneide auf beiden Seiten mehrfach wiederholt werden. Nachteilig an diesem Verfahren zur Einstellung des Schneidspaltes ist einmal dessen Ungenauigkeit durch die undefinierte Reaktionszeit des Bedieners. Zum anderen ist dieser Einstellvorgang zeitraubend und er erfordert, daß der Bediener den Fahrerstand verläßt. Schließlich kann ein Bedienungsfehler zur Zerstörung des gesamten Häckslers führen.

Mit der EP 0 291 216 B1 ist ein weiteres Verfahren zum Einstellen des Schneidspaltes zwischen der Gegenschneide und den Häckselmessern bekannt geworden, bei dem der Einstellvorgang weitestgehend automatisiert wurde. Dazu werden den Kontakt zwischen der Gegenschneide und den Häckselmessern signalisierende Meßeinrichtungen eingesetzt, was in diesem Fall auf Schwingungen ansprechende Klopfsensoren sind. Je ein Klopfsensor ist hierfür im Bereich der Gegenschneide auf deren linken und rechten Seite angebracht, deren Signale einem Mikroprozessor und einer Steuervorrichtung zugeleitet werden. Dieses Verfahren verwendet die gleichen Verfahrensschritte wie das vorstehend beschriebene nach der DE 29 26 538 C2, lediglich mit dem Unterschied, daß das Feststellen des Kontaktes zwischen der Gegenschneide und den Häckselmessern nun von den Klopfsensoren übernommen wird. Obwohl dieses Verfahren automatisch abläuft, haften ihm dennoch einige Nachteile an. Das ist einmal deren Funktionsunsicherheit, weil mechanische bzw. akustische Störsignale aus dem Umfeld des Häckslers, zum Beispiel vom Antriebssystem herrührender Körperschall und sonstige Betriebsstörpegel, die Signalaufnahme aus dem Kontakt zwischen der Gegenschneide und den Häckselmessern stören. Um diesen Nachteil in Grenzen zu halten, sind Tiefpaßfilter zur Signalaufbereitung nötig, die jedoch die Herstellungskosten für die Einstellvorrichtung erhöhen. Desweiteren sind Klopfsensoren an sich störanfällig, was sich durch deren ungünstigen Ort der Anbringung im mit Erntegut, Feuchtigkeit und Schmutz am meisten belasteten Bereich noch negativer auswirkt. Da es zur Erzeugung eines vom Klopfsensor erkennbaren Signals zu einem ziemlich heftigen Kontakt zwischen der Gegenschneide und den Häckselmessern kommen muß, unterliegen diese dadurch einem unnötig hohen Verschleiß. Dieses nahe Heranstellen der Gegenschneide führt logischerweise zu einem längeren Rückstellweg und darüber hinaus zu einer Erhöhung der Anzahl der Zu- und Rückstellvorgänge der Gegenschneide bis zu ihrer endgültig parallen Position zu den Häckselmessern, wodurch der Einstellvorgang relativ lange dauert.

Der Vollständigkeit halber ist noch auf die Verfahren zum Einstellen des Schneidspaltes nach den EP 0 509 620 B1, EP 0 510 780 B1, EP 0 510 781 B1, EP 0 511 724 B1, EP 0 676 131 A2 und EP 0 676 132 A2 hinzuweisen, die aber alle das Verfahren nach der EP 0 291 216 B1 bezüglich der Verfahrensschritte analog verwenden und nur Ergänzungen im Detail beibringen, wodurch sie prinzipiell mit den gleichen Mängeln wie das Verfahren nach der EP 0 291 216 B1 behaftet sind.

Deshalb liegt der Erfindung die Aufgabe zugrunde, ein Verfahren zum Einstellen des Schneidspaltes an Häckslem zu schaffen, das mit hoher Funktionssicherheit bereits die Annäherung der Gegenschneide an die Häckselmesser einer Häckseltrommel signalisiert, das störunanfällig und verschleißfrei arbeitet, das während des Einstellvorganges an der Gegenschneide und den Häckselmessem keinen Verschleiß verursacht und das eine Einstellung des Schneidspaltes in kurzer Zeit ermöglicht.

Diese Aufgabe wird durch die Verfahrensweise nach dem Patentanspruch 1 gelöst, wobei in den darauf rückbezogenen Unteransprüchen weitere Verfahrensschritte aufgeführt sind, die die Erfindung in vorteilhafter Weise weiterentwikkeln.

Die Zustellung der Gegenschneide auf die Häckselmesser der vorwärts oder rückwärts rotierenden Häckseltrommel beginnt aus einer Ausgangsposition, die entweder der unveränderten Position der Gegenschneide und einer gerade nachgeschliffenen Häckseltrommel oder einer im Durchmesser unveränderten sowie auch einer veränderten Häckseltrommel und einer ausgetauschten und manuell grob ausgerichteten Gegenschneide entspricht. In dieser Augangsposition ist der aktuelle Wert für den Schneidspalt größer als dessen optimaler Wert. Durch den Einsatz einer Einrichtung zur ständigen Überwachung des Schneidspaltes erkennt diese durch laufende Vergleiche der aktuellen Werte mit dem eingespeicherten optimalen Wert den Augenblick, wann der optimale Wert erreicht ist. Wenn das der Fall ist, nimmt genannte Einrichtung dahingehend auf den Einstellmechanismus Einfluß, so daß dieser augenblicklich den Zustellvorgang der Gegenschneide unterbricht. Dieser Zustellvorgang wird zuerst mit der einen Seite der Gegenschneide ausgeführt und danach mit der anderen, wobei es unerheblich ist, mit welcher Seite begonnen wird.

Bei diesem Verfahren steht die Gegenschneide nach abgeschlossener Einstellung bereits mit dem optimalen Wert für den Schneidspalt vor den Häckselmessem, ohne daß sie eins davon berührt hat.

Dabei hat es sich als zweckmäßig erwiesen, für die den Schneidspalt überwachende Einrichtung eine Längenmeßeinrichtung einzusetzten, weil das der direkte und damit genaueste Weg zur Erfassung des Wertes für den Schneidspalt ist.

Es hat sich weiterhin bewährt, den Zustellvorgang der Gegenschneide auf der zuerst eingestellten Seite kurz vor dem optimalen Wert für den Schneidspalt zu unterbrechen, weil diese Seite beim Zustellen der Gegenschneide auf der anderen Seite immer noch ein kleines Stück mitgenommen wird. Auf der anderen Seite wird der Zustellvorgang jedoch beim optimalen Wert für den Schneidspalt gestoppt, weil es dort keine Bewegungen mehr gibt.

Als eine weitere bevorzugte Möglichkeit zur Anwendung des erfindungsgemäßen Verfahrens bietet es sich an, wenigstens die Gegenschneide gegenüber den übrigen Bauteilen des Häckselaggregates, zu denen zumindest die Häckselmesser gehören, elektrisch zu isolieren und dazwischen eine Hochspannung anzulegen. Das ist über eine elektrische Verbindung realisiert, in der sich ein Strommesser und eine Auswerteeinheit befinden. Die Auswerteeinheit steht mit dem Einstellmechanismus für die Gegenschneide in funktioneller Wirkverbindung. Durch die elektrische Isolierung der Gegenschneide von den Häckselmessem an irgendeiner Stelle innerhalb des Häckselaggregates und das Anlegen einer Hochspannung zwischen diesen mittels genannter elektrischer Verbindung stehen sich die Gegenschneide und die Häckselmesser als Pole im Abstand des Schneidspaltes gegenüber. Solange der Schneidspalt entsprechend der ausgewählten Hochspannung groß genug ist, baut sich zwischen diesen Polen lediglich ein elektrisches Feld auf.

Wird die Gegenschneide auf einer Seite mittels des Einstellmechanismus auf die rotierenden Häckselmesser zugestellt, entstehen zuerst Funkenüberschläge zwischen einzelnen Häckselmessern und der Gegenschneide. Nach einer weiteren Verringerung des Schneidspaltes kommt es bald zu Funkenüberschlägen unter Einbeziehung jedes Häckselmessers, wobei sich die Funkenüberschläge auf das äußere Ende der Häckselmesser infolge des Kanteneffektes konzentrieren, weil das elektrische Feld an der Schneidkante des Häckselmessers an dieser Stelle am stärksten ausgebildet ist. Da diese Funkenüberschläge mit einem Stromfluß verbunden sind, ist deren Stromstärke und deren zeitlicher Verlauf mit dem Strommesser zu erfassen, der diese Werte an die Auswerteeinheit weitergibt. Durch deren funktionelle Wirkverbindung mit dem Einstellmechanismus wird der Zustellvorgang der Gegenschneide in dem Augenblick gestoppt, wenn jedes Häckselmesser auf dieser Seite in die Funkenüberschläge einbezogen ist.

Nachdem der Zustellvorgang auf der ersten Seite gestoppt wurde, wird er auf der anderen Seite eingeleitet. Wenn dann jedes Häckselmesser auf dieser Seite in die Funkenüberschläge einbezogen ist, wird auch hier der Zustellvorgang beendet und die Gegenschneide steht in einem optimalen Wert für den Schneidspalt den rotierenden Häckselmessern gegenüber.

Damit wären als Vorteile der Erfindung zu nennen, daß damit die Einstellung des Schneidspaltes an Häckslern mit einer hohen Funktionssicherheit bereits bei der Annäherung der Gegenschneide an die Häckselmesser möglich ist. Da es dabei zu keiner Berührung zwischen der Gegenschneide und den Häckselmessem kommt, arbeitet sie auch völlig verschleißfrei und sie ist deshalb auch störunanfällig. Sie verursacht auch während des Einstellvorganges aus vorstehend genanntem Grund keinen Verschleiß an der Gegenschneide und den Häckselmessern. Darüber hinaus geht der Einstellvorgang schnell, weil es nur noch eine Zustellbewegung und keine Rückstellbewegung mehr gibt.

Die Erfindung soll nun anhand eines Ausführungsbeispieles näher erläutert werden, wobei die einzelnen Figuren zeigen:
- Fig. 1:: eine schematische Seitenansicht des Häckselaggregates eines Feldhäckslers mit einem symbolischen Schaltkreis einer elektrischen Verbindung zwischen den Häckselmessem und der Gegenschneide

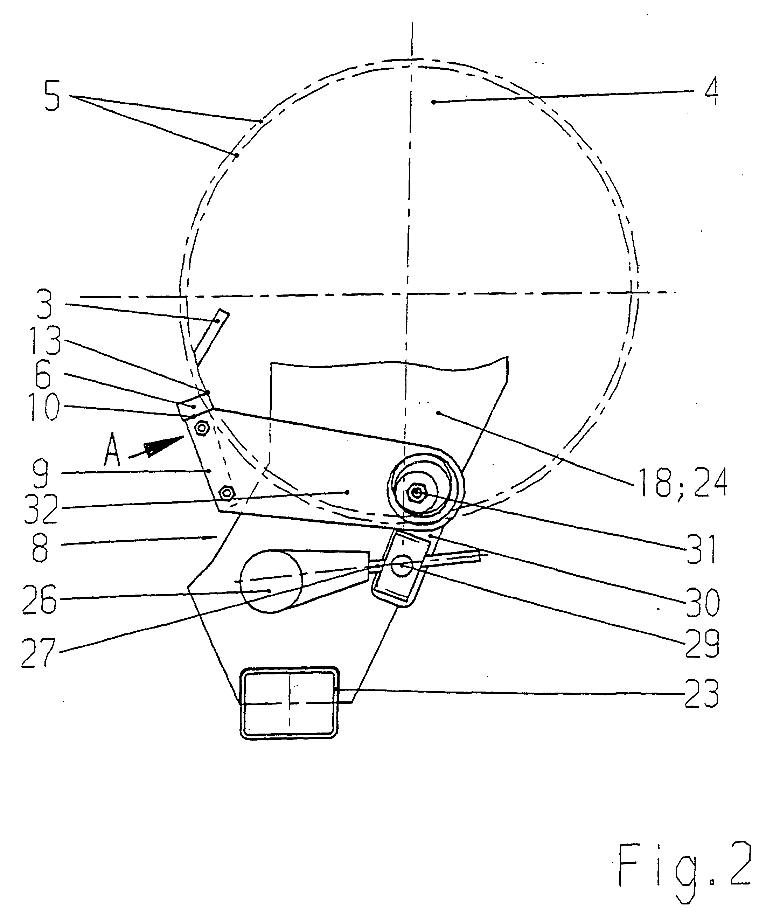

- Fig. 2:: eine Seitenansicht auf die Vorrichtung zum Einstellen des Schneidspaltes zwischen der Gegenschneide und den Häckselmessern

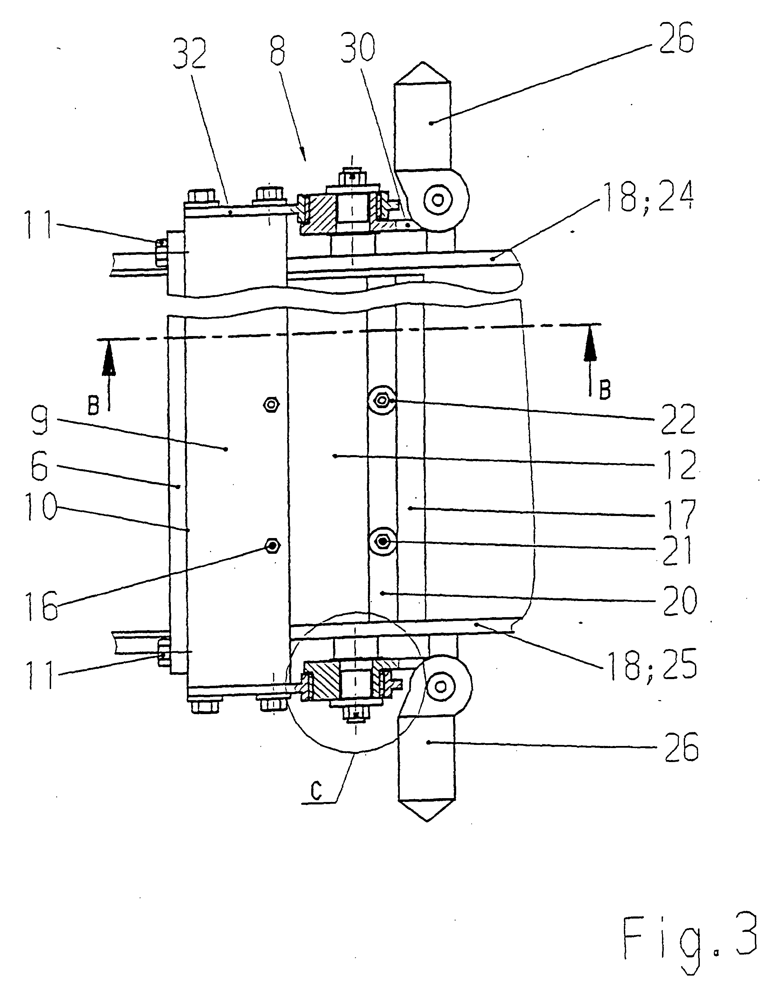

- Fig. 3:: eine Ansicht A nach Fig. 2

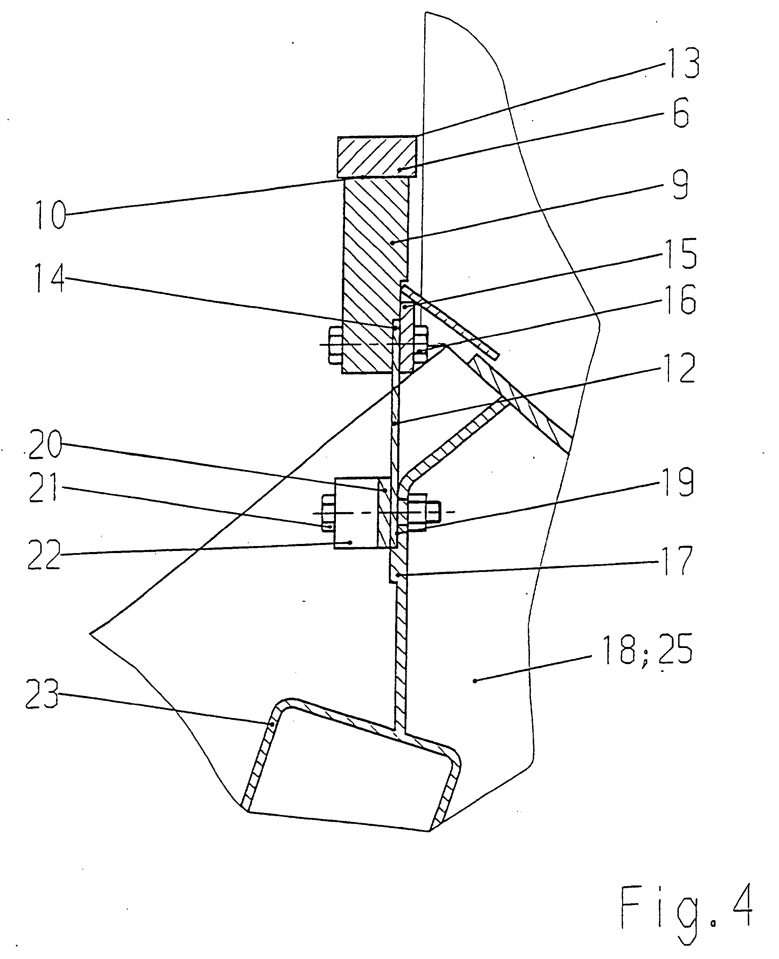

- Fig. 4:: ein Schnitt B-B nach Fig. 3

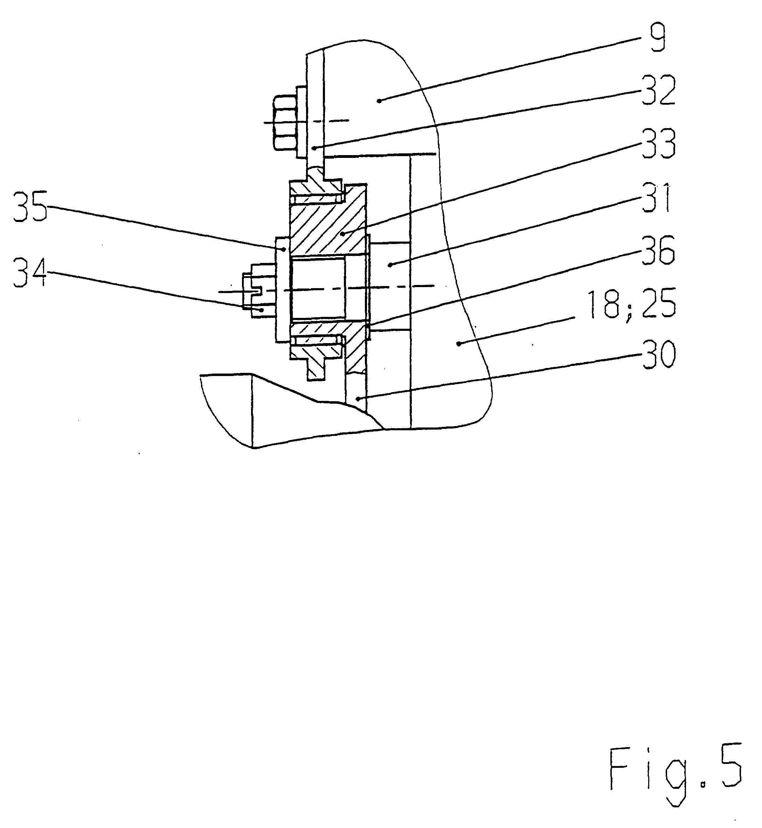

- Fig. 5:: eine Einzelheit C nach Fig. 3
- Fig. 6:: ein aufgezeichneter Stromfluß infolge von Funkenüberschlägen während des Zustellvorganges der Gegenschneide auf die Häckselmesser
- Fig. 7:: ein vergrößerter Ausschnitt aus Fig. 6.

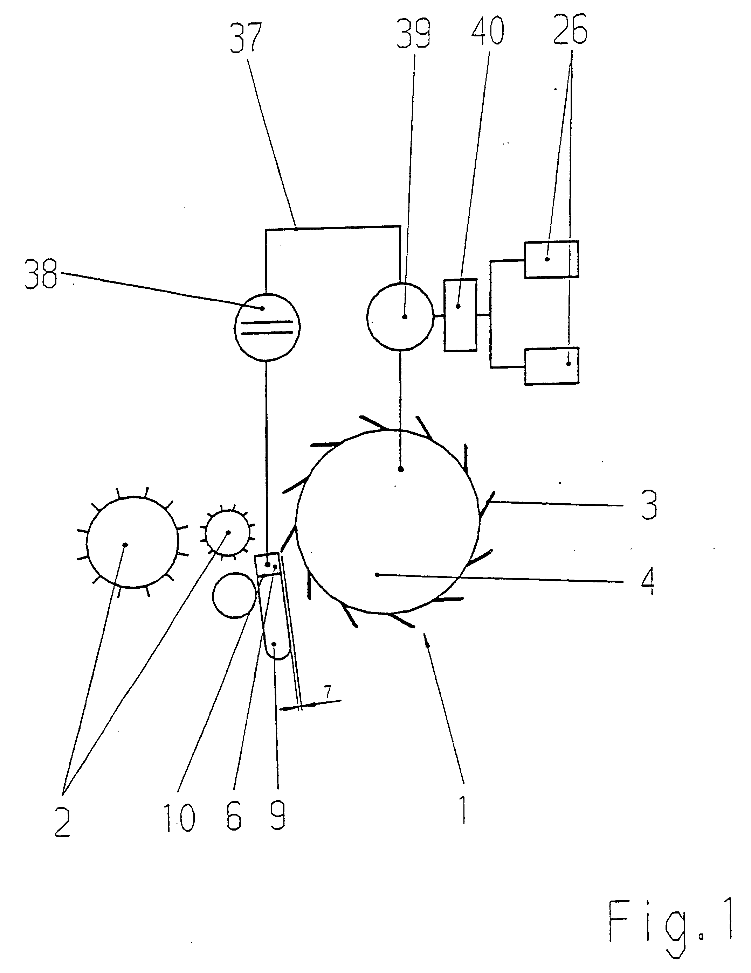

In Figur 1 sind die wichtigsten Bauteile des Häckselaggregates 1 eines Feldhäckslers zu sehen, das aus in Fahrtrichtung gesehen vom liegenden und gegensinnig rotierenden Einzugswalzen 2 besteht, denen die mit Häckselmessem 3 bestückte Häckseltrommel 4 nachgeordnet ist. Bei der Rotation der Häckseltrommel 4 beschreiben die Schneidkanten der Häckselmesser 3 den Rotationskreis 5 der Häckseltrommel 4. Zwischen den Einzugswalzen 2 und der Häckseltrommel 4 befindet sich die Gegenschneide 6 in einer horizontalen Ausrichtung zum Rotationskreis 5 der Häckseltrommel 4, wobei zwischen ihr und den Häckselmessern 3 ein gleichmäßiger Schneidspalt 7 über die gesamte Breite der Häckseltrommel 4 eingestellt ist.

Zum Einstellen eines minimalen Schneidspaltes 7 für unterschiedlich große Rotationskreise 5, beispielsweise infolge des Nachschleifens der Häckselmesser 3 bzw. der Austattung der Häckseltrommel 4 mit neuen Häckselmessern 3, ist die Gegenschneide 6 mit Hilfe eines später zu erläuternden Einstellmechanismus 8 in der örtlichen Lage innerhalb des Häckselaggregates 1 veränderbar.

Im Sinne einer vibrationsfreien Befestigung der Gegenschneide 6 innerhalb des Häckselaggregates 1 liegt sie mit ihrer ganzen Länge auf einem stabil ausgebildeten Gegenschneidenträger 9 auf, dessen Kontaktfläche mit der Gegenschneide 6 mit einer elektrisch nichtleitenden Keramikschicht 10 versehen ist. Die Gegenschneide 6 und der Gegenschneidenträger 9 sind an ihren äußeren Enden und in der Mitte mittels Paßschrauben 11 form- und kraftschlüssig miteinander verbunden, wobei durch geeignete konstruktive Maßnahmen die elektrische Isolierung zwischen der Gegenschneide 6 und dem Gegenschneidenträger 9 erhalten bleibt.

Der Gegenschneidenträger 9 ist an seiner Unterseite mit dem oberen Ende eines annähernd die lichte Weite des Häckselaggregates 1 aufweisenden Bleches 12 in Form einer Einspannung verbunden. Dieses Blech 12 erstreckt sich über seine hohe Kante gesehen in Richtung der auf die Schneidkante 13 der Gegenschneide 6 einwirkenden Schnittkraft. Die Einspannung wird dabei durch eine im Gegenschneidenträger 9 vorgesehene Ausnehmung 14 gebildet, in der das obere Ende des Bleches 12 bündig aufgenommen und mittels einer Klemmleiste 15 und mehreren Schraubverbindungen 16 am Gegenschneidenträger 9 befestigt ist.

Das untere Ende des Bleches 12 ist ebenfalls in Form einer Einspannung mit einer Querversteifung 17 des Häckseltrommelgehäuses 18 verbunden. Auch hier wird die Einspannung durch eine Ausnehmung 19 im oberen Abschnitt der Querversteifung 17 realisiert, in der das untere Ende des Bleches 12 bündig aufgenommen und mittels einer Klemmleiste 20 über Schraubverbindungen 21 mit Hülsen 22 an der Querversteifung 17 befestigt ist. Das untere Ende der Querversteifung 17 stützt sich auf einem quer ausgerichteten Träger 23 ab, der zwischen der linken Seitenwand 24 und der rechten Seitenwand 25 des Häckseltrommelgehäuses 18 eingeschweißt ist.

Der zur Einstellung des Schneidspaltes 7 dienende Einstellmechanismus 8 besteht aus links und rechts neben den äußeren Enden des Gegenschneidenträgers 9 angebrachten Bauteilen gleichen Aufbaues, die lediglich spiegelbildlich angeordnet sind. Dazu gehören gestellfest und schwenkbeweglich aufgehangene elektrische Stellmotoren 26, die antriebsmäßig mit dem einen Ende je einer Schraubspindel 27 verbunden sind. Das andere Ende der Schraubspindeln 27 ist mit einem am Häckseltrommelgehäuse 18 gelagerten Hebelmechanismus 28 über einen daran gelenkig angebrachten Gewindebolzen 29 verbunden. Das dem Gewindebolzen 29 gegenüberliegende Ende des Hebelmechanismus 28 ist an den Gegenschneidenträger 9 angeschraubt. Der Hebelmechanismus 28 besteht im Detail aus einem Schwenkhebel 30, der einenends vorstehend erwähnten Gewindebolzen 29 trägt und anderenends um einen an der linken Seitenwand 24 bzw. der rechten Seitenwand 25 befestigten Lagerbolzen 31 drehbar gelagert ist. Am Schwenkhebel 30 ist in einer Anordnung exzentrisch um den Lagerbolzen 31 ein Seitenarm 32 drehbar aufgehangen, dessen anderes Ende die Verbindung zum Gegenschneidenträger 9 herstellt. Die exzentrische Nabe 33 des Schwenkhebels 30 ist mittels einer Kronenmutter 34 und einer starken Scheibe 35 gegen einen Bund 36 des Lagerbolzens 31 in axialer Richtung anpreßbar.

Zwischen der Gegenschneide 6 und den übrigen elektrisch von ihr isolierten Bauteilen des Häckselaggregates 1 besteht eine elektrische Verbindung 37, in der sich eine Hochspannungsquelle 38 und ein Strommesser 39 befinden. Der Strommesser 39 steht über eine Auswerteeinheit 40 mit den elektrischen Stellmotoren 26 des Einstellmechanismus 8 in funktioneller Wirkverbindung.

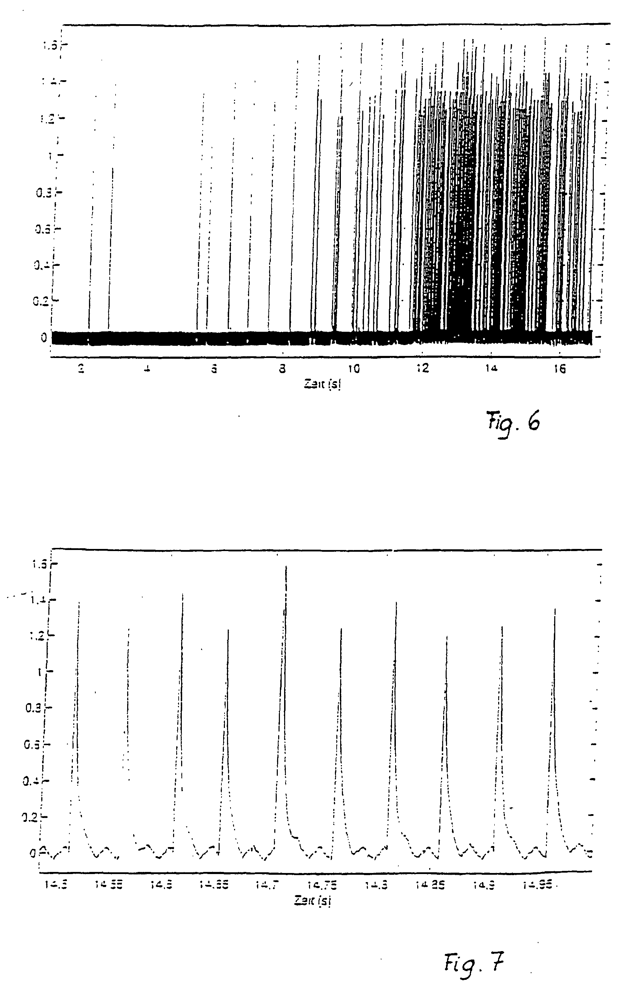

In Figur 6 ist der beispielsweise auf einem Bildschirm zu sehende Stromfluß infolge von Funkenüberschlägen zwischen den Häckselmessern 3 und der Gegenschneide 6 während des Zustellvorganges der Gegenschneide 6 aufgezeichnet, wobei in Figur 7 der Zeitabschnitt aus Figur 6 vergrößert dargestellt ist, in dem zwischen jedem Häckselmesser 3 und der Gegenschneide 6 Funkenüberschläge da sind.

### Bezugszeichenaufstellung

- 1: Häckselaggregat
- 2: Einzugswalzen
- 3: Häckselmesser
- 4: Häckseltrommel
- 5: Rotationskreis
- 6: Gegenschneide
- 7: Schneidspalt
- 8: Einstellmechanismus
- 9: Gegenschneidenträger
- 10: Keramikschicht
- 11: Paßschraube
- 12: Blech
- 13: Schneidkante
- 14: Ausnehmung
- 15: Klemmleiste
- 16: Schraubverbindung
- 17: Querversteifung
- 18: Häckseltrommelgehäuse
- 19: Ausnehmung
- 20: Klemmleiste
- 21: Schraubverbindung
- 22: Hülse
- 23: Träger
- 24: linke Seitenwand
- 25: rechte Seitenwand
- 26: Stellmotor
- 27: Schraubspindel
- 28: Hebelmechanismus
- 29: Gewindebolzen
- 30: Schwenkhebel
- 31: Lagerbolzen
- 32: Seitenarm
- 33: Nabe
- 34: Kronenmutter
- 35: Scheibe
- 36: Bund
- 37: elektrische Verbindung
- 38: Hochspannungsquelle
- 39: Strommesser
- 40: Auswerteeinheit

## Patentansprüche

1. Verfahren zum Einstellen des Schneidspaltes an Häckslem, insbesondere Feldhäckslern, mit einem Häckselaggregat (1),
◆ dessen Häckseltrommel (4) mit Häckselmessern (3) besetzt ist,
◆ dessen Gegenschneide (6) einen Schneidspalt (7) zum Rotationskreis (5) der Häckselmesser (3) aufweist,
◆ an dem sich ein Einstellmechanismus (8) mit Stellmotoren (26 ) für die Veränderung des Schneidspaltes (7) befindet, wobei diese Stellmotoren (26) mit den äußeren Enden der Gegenschneide (6) in funktioneller Wirkverbindung stehen und wechselweise betätigbar sind,
◆ das mit einer den Schneidspalt (7) überwachenden Einrichtung ausgestattet ist, die mit dem Einstellmechanismus (8) in funktioneller Wirkverbindung steht,
◆ bei dem sich die Gegenschneide (6) vor Beginn des Einstellens des Schneidspaltes (7) in einem Abstand vor den Häckselmessern (3) befindet, der größer als der optimale Wert für den Schneidspalt (7) ist,
**gekennzeichnet durch die Verfahrensschritte, daß:**
a) die den Schneidspalt (7) überwachende Einrichtung während des Zustellvorganges der Gegenschneide (6) auf der ersten Seite den optimalen Wert des Schneidspaltes (7) erkennt und bei dessen Erreichen das weitere Zustellen unterbricht,
b) die den Schneidspalt (7) überwachende Einrichtung während des Zustellvorganges der Gegenschneide (6) auf der anderen Seite auch dort den optimalen Wert des Schneidspaltes (7) erkennt und bei dessen Erreichen auch auf dieser Seite das weitere Zustellen unterbricht.

2. Verfahren nach Anspruch 1, **dadurch gekennzeichnet, daß** die den Schneidspalt (7) überwachende Einrichtung eine den Schneidspalt (7) direkt messende Einrichtung ist, die beim Erreichen des optimalen Schneidspaltes (7) die Stromzufuhr zu den Stellmotoren (26) des Einstellmechanismus (8) unterbricht.

3. Verfahren nach den Ansprüchen 1 und 2, **dadurch gekennzeichnet, daß** die den Schneidspalt (7) überwachende Einrichtung den Zustellvorgang der Gegenschneide (6) auf der zuerst eingestellten Seite bereits kurz vor Erreichen des optimalen Wertes für den Schneidspaltes (7) unterbricht und auf der dann folgenden Seite beim optimalen Wert.

4. Verfahren nach Anspruch 1, **dadurch gekennzeichnet, daß** zum Einstellen des optimalen Schneidspaltes (7) :
a) wenigstens die Gegenschneide (6) gegenüber den übrigen Bauteilen des Häckselaggregates (1), zu denen zumindest die Häckselmesser (3) gehören, elektrisch isoliert wird,
b) zwischen der Gegenschneide (6) bzw. den die Gegenschneide (6) enthaltenden elektrisch isolierten Teilen und den übrigen Bauteilen des Häckselaggregates (1) eine elektrische Verbindung (37) hergestellt wird, in der sich eine Hochspannungsquelle (38) und ein Strommesser (39) befinden,
c) der Schneidspalt (7) zum Beginn des Einstellvorganges größer als der optimale Wert des Schneidspaltes (7) ist, bei dem noch kein Funkenüberschlag zwischen der Gegenschneide (6) und den Häckselmessern (3) erfolgt,
d) der Schneidspalt (7) auf der einen Seite der Gegenschneide (6) durch den sich auf dieser Seite befindenden Stellmotor (26) des Einstellmechanismus (8) verkleinert wird, wobei die einsetztenden Funkenüberschläge vom Strommesser (39) registriert und an die Auswerteeinheit (40) weitergeleitet werden,
e) mit Erreichen einer Anzahl von Funkenüberschlägen zwischen jedem Häckselmesser (3) und der Gegenschneide (6) auf dieser Seite, was bei vorliegendem optimalen Schneidspalt (7) der Fall ist, die Auswerteeinheit (40) den Zustellvorgang der Gegenschneide (6) auf die Häckselmesser (3) stoppt,
f) der Schneidspalt (7) auf der anderen Seite der Gegenschneide (6) durch den sich dort befindenden Stellmotor (26) des Einstellmechanismus (8) verkleinert wird, wobei die einsetzenden Funkenüberschläge vom Strommesser (39) registriert und an die Auswerteeinheit (40) weitergeleitet werden,
g) mit Erreichen einer Anzahl von Funkenüberschlägen zwischen jedem Häckselmesser (3) und der Gegenschneide (6) auch auf dieser Seite, was bei vorliegendem optimalen Schneidspalt (7) der Fall ist, die Auswerteeinheit (40) den Zustellvorgang der Gegenschneide (6) auf die Häckselmesser (3) stoppt.

## Claims

1. A procedure for adjusting the cutter gap on crop choppers, especially forage harvesters, with a chopper unit (1):
• the chopper cylinder (4) of which is equipped with chopping knives (3),
• the counter-cutter blade (6) of which exhibits a cutter gap (7) towards the rotational circle (5) of the chopping knives (3),
• on which there is an adjusting mechanism (8) with adjusting motors (26) for varying the cutter gap (7) in which these adjusting motors (26) are functionally connected with the outer ends of the counter-cutter blade and can be operated alternately,
• which is equipped with a device for monitoring the cutter gap (7), which is functionally connected with the adjusting mechanism (8),
• in which the counter-cutter blade (6) before the start of the adjustment process of the cutter gap (7) is situated at a distance from the chopping knives (3), which is greater than the optimum value for the cutter gap (7),
**characterised by the procedural steps, that:**
a) the device for monitoring the cutter gap (7) during the feeding process of the counter-cutter blade (6) on the first side recognises the optimum value of the cutter gap (7) and on attaining it interrupts further feeding,
b) the device for monitoring the cutter gap (7) during the feeding process of the counter-cutter blade (6) on the other side there too recognises the optimum value for the cutter gap (7) and on attaining it interrupts further feeding also on this side.

2. A procedure in accordance with claim 1, **characterised in that**, the device for monitoring the cutter gap (7) is a direct measuring device, which on attainment of the optimum cutter gap (7) interrupts the current supply to the adjusting motors (26) of the adjusting mechanism (8).

3. A procedure in accordance with claims 1 and 2, **characterised in that**, the device for monitoring the cutter gap (7) interrupts the feeding process of the counter-cutter blade (6) on the side to be adjusted first shortly before attainment of the optimum value for the cutter gap (7) and on the following side when the optimum value is attained.

4. A procedure in accordance with claim 1, **characterised in that**, for the setting of the optimum cutter gap (7):
a) at least the counter-cutter blade (6) is electrically isolated from the remaining components of the chopper unit (1) which includes at least the chopping knives (3),
b) between the counter-cutter blade (6) and the electrically isolated parts contained in the counter-cutter blade (6) and the remaining components of the chopper unit (1) an electrical connection (37) is produced, in which there are contained a high voltage source (38) and a current meter (39),
c) the cutter gap (7) at the start of the adjustment process is greater than the optimum value for the cutter gap (7), with which a spark discharge between the counter-cutter blade (6) and the chopping knives (3) does not yet occur,
d) the cutter gap (7) on one side of the counter-cutter blade (6) is diminished by the adjusting motor (26) of the adjusting mechanism (8) located on this side, during which the incipient spark discharges are recorded by the current meter (39) and are passed on to the evaluation unit (40),
e) on attaining a number of spark discharges between every chopping knife (3) and the counter-cutter blade (6) on this side, which is the case in the presence of the optimum cutter gap (7), the evaluation unit (40) stops the adjustment process of the counter-cutter blade (6) onto the chopping knives (3),
f) the cutter gap (7) on the other side of the counter-cutter blade (6) is diminished by the adjusting motor (26) of the adjusting mechanism (8) situated on this side, during which the incipient spark discharges are recorded by the current meter (39) and passed on to the evaluation unit (40),
g) on attaining a number of spark discharges between every chopping knife (3) and the counter-cutter blade (6) on this side, which is the case in the presence of the optimum cutter gap (7), the evaluation unit (40) stops the adjustment process of the counter-cutter blade (6) onto the chopping knives (3).

## Revendications

1. Procédé pour le réglage de l'intervalle de coupe de hacheurs, en particulier des récolteuses-hacheuses-chargeuses, avec un groupe hacheur (1) :
- dont le tambour hacheur (4) est doté de lames tranchantes (3),
- dont le contre-couteau (6) présente un intervalle de coupe (7) par rapport au cercle de rotation (5) des lames tranchantes (3),
- sur lequel se trouve un mécanisme de réglage (8) avec des moteurs de positionnement (26) pour la modification de l'intervalle de coupe (7), ces moteurs de positionnement (26) étant en liaison efficace fonctionnelle avec les extrémités extérieures du contre-couteau (6) et étant actionnables alternativement,
- qui est équipé d'un dispositif surveillant l'intervalle de coupe (7), dispositif qui est en liaison fonctionnelle avec le mécanisme de réglage (8)
- pour lequel le contre-couteau (6) avant le début du réglage de l'intervalle de coupe (7) se trouve, par rapport aux lames tranchantes (3), à une distance qui est supérieure à la valeur optimale de l'intervalle de coupe (7),
**caractérisé par** les étapes de procédé en ce que :
a) le dispositif qui surveille l'intervalle de coupe (7) détecte pendant l'approche du contre-couteau (6) du premier côté la valeur optimale de l'intervalle de coupe (7) et interrompt la poursuite de l'approche lors de son atteinte,
b) le dispositif de surveillance de l'intervalle de coupe (7) pendant l'approche du contre-couteau (6) de l'autre côté détecte également à cet endroit la valeur optimale de l'intervalle de coupe (7) et interrompt la poursuite de l'approche de ce côté lors de l'atteinte de cette valeur optimale.

2. Procédé selon la revendication 1, **caractérisé en ce que** le dispositif qui surveille l'intervalle de coupe (7) est un dispositif qui mesure directement l'intervalle de coupe (7) et qui, lors de l'atteinte de l'intervalle de coupe optimal (7), interrompt l'alimentation électrique des moteurs de positionnement (26) du mécanisme de réglage (8).

3. Procédé selon les revendications 1 et 2, **caractérisé en ce que** le dispositif qui surveille l'intervalle de coupe (7) interrompt l'approche du contre-couteau (7) par rapport au côté réglé d'abord peu avant l'atteinte de la valeur optimale pour l'intervalle de coupe (7) et, pour le côté qui suit, lors de l'atteinte de la valeur optimale.

4. Procédé selon la revendication 1, **caractérisé en ce que**, pour le réglage de l'intervalle de coupe optimal (7) :
a) au moins le contre-couteau (6) est isolé électriquement par rapport aux autres éléments du groupe hacheur (1) dont au moins les lames tranchantes (3) font partie,
b) entre le contre-couteau (6) et les pièces isolées électriquement incluant le contre-couteau (6) et les autres éléments du groupe hacheur (1), une connexion électrique (37) est établie dans laquelle se trouvent une source de haute tension (38) et un ampèremètre (39),
c) l'intervalle de coupe (7) au début du processus de réglage, est supérieur à la valeur optimale de l'intervalle de coupe (7) pour lequel aucun amorçage d'arc n'a encore lieu entre le contre-couteau (6) et les lames tranchantes (3),
d) l'intervalle de coupe (7), sur un côté du contre-couteau (6), est diminué par le moteur de positionnement (26) du mécanisme de réglage (8) qui se trouve de ce côté, les amorçages d'arc à introduire étant enregistrés par l'ampèremètre (39) et transmis à l'unité d'analyse (40),
e) avec l'atteinte d'un nombre défini d'amorçages d'arc entre chaque lame tranchante (3) et le contre-couteau (6) de ce côté, ce qui est le cas pour l'intervalle de coupe (7) optimal présent, l'unité d'analyse (40) arrête le rapprochement du contre-couteau (6) par rapport aux lames tranchantes (3),
f) l'intervalle de coupe (7) sur l'autre côté du contre-couteau (6) est diminué par le moteur de positionnement (26) du mécanisme de réglage (8) qui se trouve de ce côté, les amorçages d'arc à introduire étant enregistrés par l'ampèremètre (39) et transmis à l'unité d'analyse (40),
g) avec l'atteinte d'un nombre défini d'amorçages d'arc entre chaque lame tranchante (3) et le contre-couteau (6) de ce côté également, ce qui est le cas pour l'intervalle de coupe (7) optimal présent, l'unité d'analyse (40) arrête le rapprochement du contre-couteau (6) par rapport aux lames tranchantes (3).
